# EUROPEAN PATENT APPLICATION

(11) **EP 2 779 640 A1**
(43) Date of publication of application: **17.09.2014**
(21) Application number: 12852915.3
(22) Date of filing: 26.11.2012
(51) Int. Cl.: H04N 7/18

(54) **SECURITY SYSTEM FOR TRACKING AND SURVEILLING AN OBJECT DETERMINED AS UNRECOGNIZABLE USING A SURVEILLANCE CAMERA AND METHOD FOR PROVIDING SECURITY SERVICE USING THE SYSTEM**

(30) Priority: 29.11.2011 KR 20110125781
(71) Applicant: Korbi Co., Ltd., Gyeonggi-do 431-755 (KR)
(72) Inventor: HYUN, Moon Sik, Seoul 138-747 (KR)
(74) Representative: Regimbeau
(86) International application number: PCT/KR2012/010032
(87) International publication number: WO 2013/081340

(57) **Abstract**

A security system according to the present invention comprises: a surveillance object selection apparatus comprising at least one first camera, a first memory for receiving an image of an object from the first camera and storing the received image, a first control unit for determining as unrecognizable the image of the object stored in the first memory based on predetermined criterion and generating a surveillance object selection signal, and a transmitting unit for transmitting the surveillance object selection signal in accordance with the instruction from the first control unit; and a surveillance object tracking apparatus comprising a receiving unit connected to the surveillance object selection apparatus in a wired or wireless manner to receive the surveillance object selection signal from the surveillance object selection apparatus, at least one second camera, and a second control unit for controlling the second camera to track and surveil the object determined as unrecognizable upon receipt of the surveillance object selection signal from the receiving unit.

## Description

### [Technical Field]

The present invention relates to a security system using surveillance cameras and a method of providing security service using the same and, more particularly, to a security system having effective and enhanced security performance by selectively and intensively supervising the traces of a subject having a potentially security danger within a surveillance range allowed by the surveillance cameras and a method of providing security service using the same.

### [Background Art]

So-called Closed Circuit Television (CCTV) is a technology for sending signals to a limited monitor at a specific place using a video camera, and is commonly used in a surveillance camera.

In general, CCTV is fixed to and installed at a place that is suitable for covering an assigned surveillance area, and is chiefly driven in order to manage the safety of public facilities, such as roads, buildings, subway stations, airports, and harbors, but CCTV is also used with the purpose of maintaining the security of side streets or homes and securing evidential data when a crime occurs.

It is recently expected to introduce a smart disaster management system for automatically recognizing the flooding of a river using CCTV and sending information. In the past, passive control was performed in which a person directly monitored watermarks installed at a bridge or rivers through CCTV and checked whether or not a water level exceeded a danger level. A system capable of determining "water" and "areas other than water" based on CCTV images, automatically detecting a change in the water level, and immediately taking measures is recently being developed. In such a case, a person does not need to monitor CCTV images while residing in an emergency room around the clock. Furthermore, although a manager in chief is out of office, the system may automatically detect an abnormal condition received through CCTV images, and may provide notification of the abnormal condition through the mobile phone of the manager in chief or an alarm system.

As CCTV is widely used for various security reasons, such as safety management, the prevention of crimes, the securing of crime evidence, and the protection of disasters, as described above, the development of new security technologies related to CCTV is also accelerated.

For example, Korean Patent Application Publication No. 2009-0007809 (hereinafter referred to as "Prior Art Document 1") regarding "System and Method for Real-time Relay Motion Picture and User Created Content" discloses a system and method for relaying mobile real-time images and UCC.

More specifically, Prior Art Document 1 compriseses a video retriever server for collecting image information from an image source and generating a common image stream by converting the collected image information using a common codec; a video conversion server for controlling the common image stream converted by the common codec in a size corresponding to the screen of a mobile phone; and a mobile frontend server for, when the mobile phone that attempts to receive the common image stream is accessed, sending the common image stream of the video conversion server to the connected mobile phone via a mobile communication service provider server in response to a request for the image of the connected mobile phone. Accordingly, a system capable of integrating a web cam, a security system based on CCTV, and an image service system of a Video On Command (VOD) type, which are conventionally distributed, and of implementing real-time service that connects VOD content, a TV home shopping image, traffic information CCTV, a client, and a mobile phone into a single system is implemented using the elements of Prior Art Document 1.

In addition, Korean Patent No. 1037870 (hereinafter referred to as "Prior Art Document 2") regarding "Image Transmitting System for Supporting Security Function" discloses a security system using an Internet Protocol (IP) camera.

More specifically, Prior Art Document 2 proposes the image transmission system using the IP camera and having a security function, comprising a single main body unit and LED lamp modules combined with both sides of the main body unit. The single main body unit is configured to comprise the IP camera configured to comprise a camera module, a location control unit, an encoder, an image compression chip, a CPU, a web server, and an audio control unit; a binary CDMA communication module configured to exchange multimedia data and control signals with the web server and a control conversion unit; the control conversion unit configured to operate in conjunction with a GPS lamp control unit, the CPU and web server of the IP camera, and the binary CDMA communication module; a voice input and output unit configured to comprise a speaker, a microphone, and an audio amplifier; an earth leakage breaker; a power supply unit; and a surge protector. The LED lamp module combined with the single main body unit is configured to comprise a switching mode power supply, an LED lamp, and a GPS lamp control unit. Furthermore, a system capable of enabling real-time and simultaneous monitoring in a remote administrator terminal and the terminal of a related institution and capturing an identifiable image not having backlight or a blind spot using the LED lamp is implemented through such a construction.

As described above, CCTV now deviates from a literal meaning 'closed circuit television', and is understood as a concept that generally denotes a security system using a variety of surveillance cameras for security regardless of the name, type, and driving method of cameras, such as a web cam, an IP camera, and a CCTV camera.

However, in the case of the aforementioned prior arts comprising Prior Art Document 1 and Prior Art Document 2, the surveillance camera is limited from a viewpoint of security convenience and efficiency because it performs the same surveillance operation on all subjects within a surveillance area.

That is, although security content from CCTV or the web cam is integrated and managed according to Prior Art Document 1 or a technology capable of capturing an image not having backlight or a blind spot using the IP camera and the LED lamp is implemented according to Prior Art Document 2, contents included in the surveillance camera have only importance having the same level from a standpoint of a security official, and in order to determine that a meaningful scene or subject means what in order to prevent a crime or secure evidence, a security official, such as a policeman or a policewoman, has to directly search for a person that similarly answers the description of the photo of a most wanted criminal or a montage, for example, within a recorded moving picture while changing and checking security content one by one.

In order to solve such a problem, a security technology for automatically determining situations having illegal transactions of high danger using a face recognition scheme has been developed. Furthermore, an example of such a technology comprises Korean Patent Application Publication No. 1999-0064414 (hereinafter referred to as "Prior Art Document 3") regarding "Method for Preventing Filthy transactions in Bank Transaction Machine Using Face Recognition."

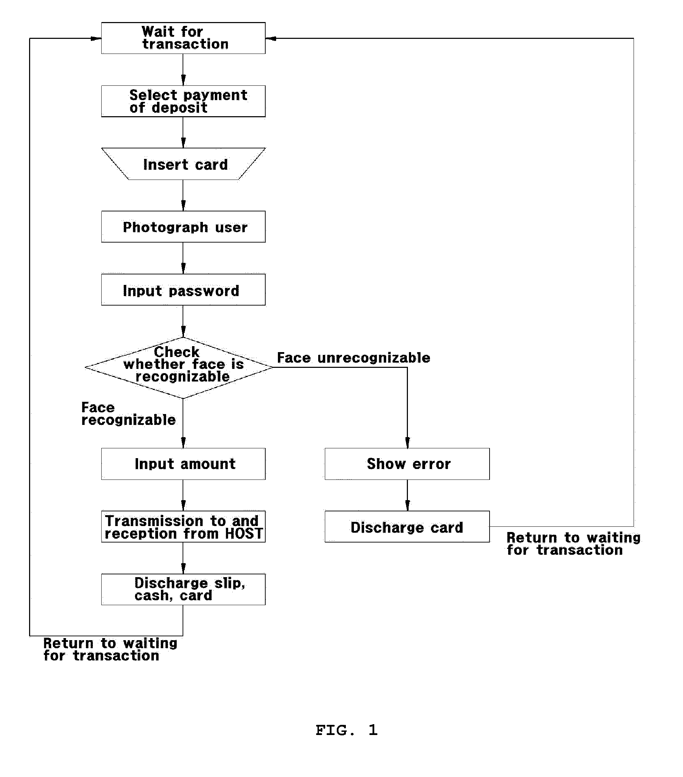

FIG. 1 is a diagram illustrating a security service providing method according to Prior Art Document 3. More specifically, as also shown in FIG. 1, Prior Art Document 3 provides a method of preventing an illegal transaction in a bank transaction processing apparatus using face recognition, wherein if an image of a face is unable to be recognized due to an abnormal face, such as a masked face, transaction is not fundamentally prevented based on plane characteristic points. In particular, Prior Art Document 3 comprises a first step of photographing the face of a customer with which transaction will be made using a camera and processing and receiving a photographed image signal; a second step of detecting, by a main control unit, plane characteristic points, such as eyes, a nose, a mouth, and a face outline, in the image signal received from the camera in the first step using an image recognition algorithm and an image recognition library and determining whether or not the image is normal based on the plane characteristic points; and a third step of continuing to perform transaction if the image is recognizable and displaying an impossible error if the image is unrecognizable. As described above, according to Prior Art Document 3, for example, a person who stole another person's bankbook or credit card may be automatically prevented from using a bank's ATM illegally. Although another person's bankbook or credit card is illegally used, the face of a corresponding person who committed a theft will have been sufficiently recognized. Accordingly, it is expected to be more helpful in investigating the crime.

In the case of Prior Art Document 3, however, it is impossible to track a subject whose face is unable to be recognized regarding that the subject moves where and how. This may be checked from a process of FIG. 1, wherein a bank ATM checks whether or not a face is recognizable, shows an error to a user if, as a result of the check, the face is found to be unrecognizable, discharges a card inserted by the user, and returns to a transaction waiting state.

In other words, Prior Art Document 3 may achieve an effect in which a person whose face is unrecognizable is prevented from doing bank business using an ATM. However, like Prior Art Documents 1 and 2, Prior Art Document 3 has limits in terms of security convenience or efficiency in that the person concerned with investigation has to directly check that a person whose ATM transaction had been rejected has subsequently made his escape along what path or has committed an additional crime using other CCTV cameras.

### [Disclosure]

### [Technical Problem]

The present invention has been made in view of the above problems occurring in the prior art, and an object of the present invention is to provide a security system having effective and enhanced security performance by selectively and intensively supervising the traces of a subject having a potentially security danger within a surveillance range allowed by the surveillance cameras and a method of providing security service using the same.

### [Advantageous Effects]

In accordance with the present invention, a first camera determines a subject whose face is unrecognizable to be a surveillance object, and a second camera tracks and supervises the surveillance object subject determined as described above. Accordingly, the traces of a subject who has a potential security danger can be selectively supervised within a surveillance range permitted by the second camera, and a security system and security service having more effective and further enhanced security performance can be provided.

### [Description of Drawings]

FIG. 1 is a diagram illustrating a conventional security service providing method.
FIG. 2 is a diagram showing the construction of a security system in accordance with an embodiment of the present invention.
FIG. 3 is a flowchart illustrating a security service providing method in accordance with an embodiment of the present invention.

### <Description of reference numerals of principal elements in the drawings>

- 100: surveillance object determination apparatus
- 111, 121: first camera
- 200: surveillance object tracking apparatus
- 210: reception unit
- 220: second control unit
- 230: second memory
- 240, 250: second camera
- 300: door lock device
- 400: alarm device
- 500: security system

### [Best Mode]

In order to achieve the object, a first aspect of the present invention provides a security system using a plurality of surveillance cameras, comprising a surveillance object determination apparatus comprising at least one first camera, first memory for receiving an image of a subject from the first camera and storing the image, a first control unit for determining the image of the subject stored in the first memory to be unrecognizable according to a specific criterion and generating a surveillance object selection signal, and a transmission unit for sending the surveillance object selection signal in response to an instruction from the first control unit; and a surveillance object tracking apparatus connected to the surveillance object determination apparatus in a wired or wireless way and comprising a reception unit for receiving the surveillance object selection signal from the surveillance object determination apparatus, at least one second camera, and a second control unit for controlling the second camera so that the second camera tracks and supervises the subject determined to have been unrecognizable when the surveillance object selection signal is received from the reception unit.

In the first aspect of the present invention, the surveillance object tracking apparatus comprises a plurality of the second cameras. In such a case, different and specific surveillance ranges may be set in the plurality of second cameras, respectively, and when the subject determined to have been unrecognizable moves and deviates from a specific surveillance range of one camera of the plurality of second cameras, the second control unit preferably determines whether or not the subject determined to have been unrecognizable belongs to a specific surveillance range of the other camera of the plurality of second cameras and controls the other camera of the plurality of second cameras so that the second control unit assists an operation of tracking and supervising, by the other camera, the subject based on a result of the determination. In this case, the security system in accordance with the first aspect of the present invention preferably further comprises a door lock device placed within the specific surveillance range and connected to the surveillance object tracking apparatus. In this case, the second control unit may be configured to generate a door lock start-up signal when the subject determined to have been unrecognizable moves and enters the specific surveillance range in which the door lock device is placed, and the door lock device may be configured to be activated when the door lock signal is received from the second control unit and to prevent the subject from deviating from the specific surveillance range in which the door lock device is placed.

Furthermore, in the first aspect of the present invention, the surveillance object determination apparatus comprises a plurality of the first cameras. In such a case, the first control unit preferably generates the surveillance object selection signal only when a specific number or more of the plurality of first cameras determine the subject to be unrecognizable.

Meanwhile, in the first aspect of the present invention, the surveillance object determination apparatus comprises a plurality of the first cameras. In such a case, the first control unit may be configured to generate a signal for cancelling a selection of a surveillance object for the subject determined to have been unrecognizable if one camera of the plurality of first cameras determines the subject to be unrecognizable and then the other camera of the plurality of first cameras determines that the subject is recognizable.

In the first aspect of the present invention, the surveillance object tracking apparatus may comprise second memory. In such a case, the second control unit preferably automatically stores images of the subject determined to have been unrecognizable, tracked and supervised by the second camera from the time when the surveillance object selection signal is received, in the second memory.

Furthermore, in the first aspect of the present invention, an alarm device connected to the surveillance object determination apparatus may be further included. In such a case, the alarm device more preferably generates an alarm message when the surveillance object selection signal is received from the surveillance object determination apparatus.

In the first aspect of the present invention, the specific criterion is based on whether or not each of an eye, nose, mouth, and face outline of the subject, for example, is found to be at least a specific ratio or higher. In such a case, the first control unit is driven according to a face recognition algorithm based on the specific criterion.

Moreover, in the first aspect of the present invention, the at least one first camera and the at least one second camera more preferably comprise a smart phone.

Meanwhile, in order to achieve the object, a second aspect of the present invention provides a security service providing method using a security system comprising surveillance cameras, wherein the security system comprises a surveillance object determination apparatus comprising at least one first camera, first memory for receiving an image of a subject from the first camera and storing the image, and a first control unit; and a surveillance object tracking apparatus comprising at least one second camera and a second control unit connected to the second camera, and connected to the surveillance object determination apparatus in a wired or wireless way, and the security service providing method comprises a first step of determining, by the first control unit, an image of a subject stored in the first memory to be unrecognizable according to a specific criterion and generating a surveillance object selection signal; and a second step of controlling, by the second control unit, the second camera so that the second camera tracks and supervises the subject determined to have been unrecognizable when the surveillance object selection signal is received.

In the second aspect of the present invention, the surveillance object tracking apparatus comprises a plurality of the second cameras, and different and specific surveillance ranges are set in the plurality of second cameras, respectively. In such a case, the security service providing method preferably further comprises a third step of determining, by the second control unit, whether or not the subject determined to have been unrecognizable belongs to a specific surveillance range of the other camera of the plurality of second cameras when the subject determined to have been unrecognizable moves and deviates from a specific surveillance range of one camera of the plurality of second cameras and controlling the other camera so that the other camera accessarily tracks and supervises the subject based on a result of the determination. Furthermore, the security system further comprises a door lock device placed within the specific surveillance range and connected to the surveillance object tracking apparatus, and the security service providing method more preferably further comprises a fourth step of generating, by the second control unit, a door lock start-up signal when the subject determined to have been unrecognizable moves and enters the specific surveillance range in which the door lock device is placed and a fifth step of the door lock device being activated when the door lock signal is received from the second control unit and preventing the subject from deviating from the specific surveillance range in which the door lock device is placed.

In the second aspect of the present invention, the surveillance object determination apparatus comprises a plurality of the first cameras. In such a case, the first step may comprise a step of generating, by the first control unit, the surveillance object selection signal only when a specific number or more of the plurality of first cameras determine the subject to be unrecognizable.

In the second aspect of the present invention, the surveillance object determination apparatus comprises a plurality of the first cameras. In such a case, the first step may comprise a step of generating, by the first control unit, a signal for cancelling a selection of a surveillance object for the subject determined to have been unrecognizable if one camera of the plurality of first cameras determines the subject to be unrecognizable and then the other camera of the plurality of first cameras determines that the subject is recognizable.

Furthermore, in the second aspect of the present invention, the surveillance object tracking apparatus comprises second memory. In such a case, the security service providing method preferably further comprises a sixth step of automatically storing, by the second control unit, images of the subject determined to have been unrecognizable, tracked and supervised by the second camera from the time when the surveillance object selection signal is received, in the second memory.

In the second aspect of the present invention, the security system may further comprise an alarm device connected to the surveillance object determination apparatus, and the security service providing method may further comprise a seventh step of generating, by the alarm device, an alarm message when the surveillance object selection signal is received from the surveillance object determination apparatus.

As in the first aspect of the present invention, in the second aspect of the present invention, the specific criterion is based on whether or not each of an eye, nose, mouth, and face outline of the subject is found to be at least a specific ratio or higher. In such a case, the first control unit is driven according to a face recognition algorithm based on the specific criterion.

Moreover, in the second aspect of the present invention, the at least one first camera and the at least one second camera preferably comprise a smart phone. In such a case, the security service providing method further comprises an eighth step of downloading and installing a smart phone application for executing an algorithm according to the security service providing method on the smart phone.

### [Mode for Invention]

Preferred embodiments of the present invention are described in detail below with reference to the accompanying drawings. For reference, in several drawings, the same reference numerals denote the same elements. In such a case, a redundant description is omitted.

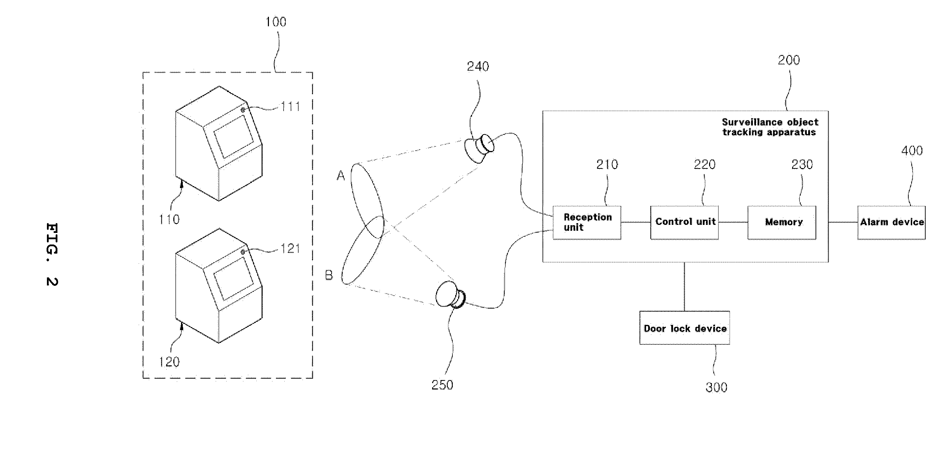

FIG. 2 is a diagram showing the construction of a security system in accordance with an embodiment of the present invention.

Referring to FIG. 2, the security system 500 according to the present invention comprises a plurality of cameras 111, 121, 240, and 250. The plurality of cameras 111, 121, 240, and 250 may be CCTV surveillance cameras installed at airports or banks, for example. In addition to the CCTV surveillance cameras, web cams and IP cameras may be included in the plurality of cameras 111, 121, 240, and 250 according to the present invention. Furthermore, the cameras of common mobile phones or smart phones on which camera functions are mounted may also be included.

Furthermore, the plurality of cameras 111, 121, 240, and 250 included in the security system 500 according to the present invention may be classified into the first cameras 111 and 121 used to determine which one of numerous subjects will be determined to be a concentrated surveillance object and the second cameras 240 and 250 used to track, photograph, and supervise the subject determined to be the surveillance object, depending on functions performed by the plurality of cameras. It is to be noted that in the present invention, the first cameras 111 and 121 and the second cameras 240 and 250 are classified according to the aforementioned roles and functions and the first cameras 111 and 121 and the second cameras 240 and 250 may be physically the same cameras. In addition to surveillance areas A and B, surveillance areas may be assigned to the first cameras 111 and 121 additionally as the second cameras, and the first cameras 111 and 121 may perform an operation of tracking, photographing, and supervising a surveillance object subject.

First, the first cameras 111 and 121 are elements that form a surveillance object determination apparatus 100. The surveillance object determination apparatus 100, as described above, is an element for determining which one of numerous subjects photographed by the plurality of cameras 111, 121, 240, and 250 will be determined to be a surveillance object. FIG. 1 illustrates the case where the surveillance object determination apparatus 100 comprises a plurality of bank ATMs 110 and 120.

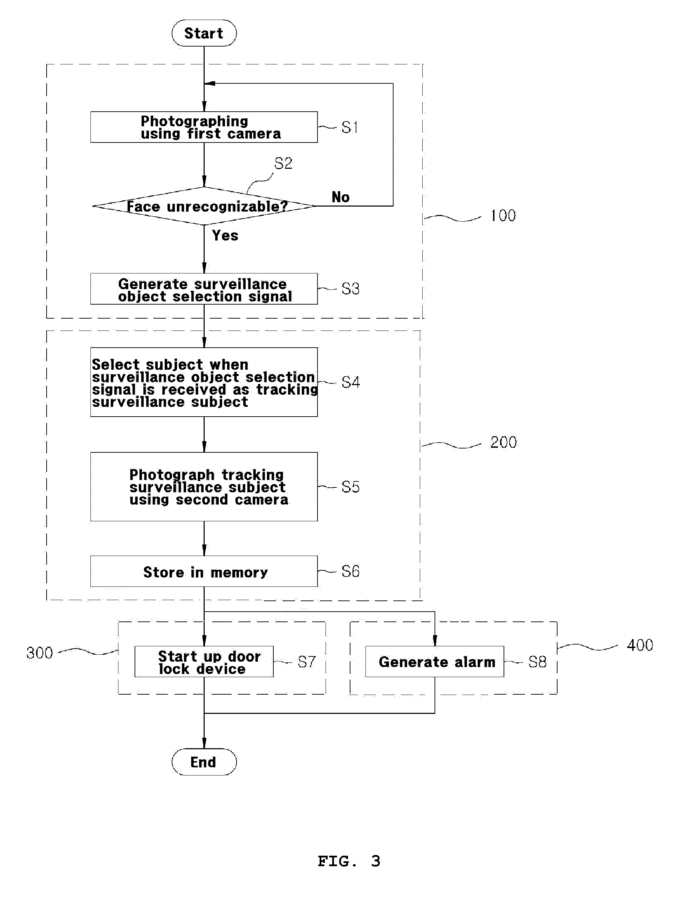

However, the surveillance object determination apparatus 100 does not need to comprise the plurality of ATMs 110 and 120. Any one of an ATM, an IP camera, a smart phone, or a CCTV system capable of performing step S1 to step S3 to be described later with reference to FIG. 3 may become the surveillance object determination apparatus 100.

In particular, a smart phone may become the most preferred example of the surveillance object determination apparatus 100 that is applicable to the security system 500 according to the present invention. As wired/wireless Internet are recently widely spread and are rapidly used, a variety of data communication technologies, such as Time Division Multiple Access (TDMA), Global System for Mobile (GSM) communication, Code Division Multiple Access (CDMA), Wideband Code Division Multiple Access (W-CDMA), Long Term Evolution (LTE), Wireless Fidelity (Wi-Fi), and Wireless Broadband Internet (WiBro), have been developed and commercialized.

Furthermore, a mobile phone is not limited to the support of only a voice call between users, and the functions of the mobile phone are significantly enhanced on the strength of such advanced data communication technologies so that the mobile phone may function as a kind of a very small-sized computer. As mobile communication terminals of a new concept, such as a Personal Digital Assistant (PDA), a tablet computer, and a net book, are emerging, a user has become able to access wireless Internet anytime or anywhere and exchange pieces of e-mail or has become able to enjoy multimedia content while moving.

From among them, in particular, a smart phone is a mobile communication terminal in which the advantages of a mobile phone and a PDA are combined and which data communication functions, such as scheduling, fax transmission/reception, and Internet access, are integrated into a small-sized device in addition to a voice call function. Accordingly, the convenience and availability of the smart phone are further increased.

The most significant characteristic of the smart phone is that a user may select, add, or delete several hundreds of various applications as the user wishes, unlike existing mobile phones that have been released as complete products and used for only given functions. In addition, the smart phone is significantly different from common mobile phones in that the user of the smart phone may directly access the Internet using wireless Internet, may access Internet content in various ways using various types of browsing programs, and may directly produce a desired application, and an application may be shared between smart phones having the same Operating System (OS).

In fact, in a recent smart phone, a user's convenience has been improved because a display interface of a wider touch screen is mounted on the recent smart phone as compared to that of the past common mobile phone, and the recent smart phone may be charged and simultaneously used to exchange data stored in a personal computer using an interface called a so-called docking station. Furthermore, the recent smart phone is equipped with a Personal Information Management (PMI) function capable of managing several thousands of addresses. Moreover, the smart phone is now conveniently applied to real life regardless of activity fields, such as mobile Internet banking, mobile credit cards, mobile social networking, and mobile shopping. To this end, banks, security companies, credit card companies, social commerce companies, and Internet shopping mall companies develop their unique smart phone applications according to the OS of a corresponding smart phone, and distribute the unique smart phone applications to users free or charge.

Accordingly, if an application on which a process function of FIG. 3 is mounted is installed on a smart phone and configured so that it may perform wireless communication with a surveillance object tracking apparatus 200 to be described later, the users of all smart phones within an airport or a bank, for example, may be admitted to the elements of the security system 500 according to the present invention, thereby being capable of maximizing a security function. Furthermore, a smart phone and a camera mounted on the smart phone may become the surveillance object tracking apparatus 200 to be described later and the second cameras 240 and 250 included in the surveillance object tracking apparatus 200.

Referring back to FIG. 2, the ATM 110, 120 as the surveillance object determination apparatus 100 comprises the at least one first camera 111, 121 and first memory (embedded in the ATM 110, 120 and not shown in FIG. 2) for receiving an image of a subject from the first camera 111, 121 and storing the image.

Furthermore, the ATM 110, 120 as the surveillance object determination apparatus 100 comprises a first control unit (embedded in the ATM 110, 120 and not shown in FIG. 2) configured to determine an image of a subject, stored in the first memory (not shown), to be unrecognizable according to a specific criterion and generate a surveillance object selection signal and a transmission unit (embedded in the ATM 110, 120 and not shown in FIG. 2) configured to send the surveillance object selection signal in response to an instruction from the first control unit (not shown).

Incidentally, the ATM 110, 120 or the transmission unit (not shown) of a smart phone as the surveillance object determination apparatus 100 does not need to comprise a transmission unit according to the same communication protocol. The transmission unit of the ATM 110, 120 or a smart phone may be configured using a network in which a wired line and a wireless line are integrated.

Meanwhile, for example, when a person attempts to use the ATM 110, the first control unit (not shown) of the surveillance object determination apparatus 100 may drive a face recognition algorithm according to a specific criterion based on an image of the person captured by the first camera 111. In such a case, the specific criterion may be based on whether or not each of the eye, nose, mouth, and face outline of a subject is found to be at least a specific ratio or higher. For example, an algorithm for determining the face to be unrecognizable if each of the eye, nose, mouth, and face outline is not recognized as being 80% or higher or for determining the face to be unrecognizable if each of the eye, nose, mouth, and face outline is not recognized as being 80% or less may be applied. An additional description of face recognition technology itself is omitted because the face recognition technology is not the core of the present invention. It is to be noted that the face recognition algorithm of the first control unit (not shown) may be configured in various ways using a prior art, such as that disclosed in Korean Patent Application Publication No. 1999-64414, for example.

Furthermore, if the surveillance object determination apparatus 100 comprises a plurality of the first cameras 111 and 121 as shown in FIG. 2, the first control unit (not shown) may be configured to generate a surveillance object selection signal only when a subject is determined to be unrecognizable using a specific number of the plurality of first cameras 111 and 121. In this case, the surveillance object selection signal may be transmitted to a specific device (e.g., a smart phone) such that a user is aware that a surveillance object has been selected. In particular, the surveillance object selection signal may be processed and transmitted in various forms, such as SMS, MMS, and e-mail. For example, if a total of four ATMs and a total of ten smart phones operate as the surveillance object determination apparatus 100, the surveillance object determination apparatus 100 may finally generate a surveillance object selection signal only when recognition is determined to be impossible using at least five devices in order to prevent a surveillance object from being erroneously selected due to an error of face recognition.

Furthermore, in the case where a surveillance object has been erroneously selected, if one (e.g., 111) of a plurality of first cameras 111 and 121 determines that a subject is unrecognizable and then the other camera (e.g., 121) of the plurality of first cameras 111 and 121 determines that the subject is recognizable, the first control unit (not shown) may be configured to generate a signal that cancels the selection of the surveillance object regarding the subject determined to have been unrecognizable so that the error in the selection of the surveillance object may be corrected afterwards.

Next, referring to FIG. 2, the security system 500 according to the present invention is equipped with the surveillance object tracking apparatus 200. The surveillance object tracking apparatus 200 comprises a reception unit 210 connected to the surveillance object determination apparatus 100 in a wired or wireless way and configured to receive the aforementioned surveillance object selection signal from the surveillance object determination apparatus 100.

The surveillance object tracking apparatus 200 comprises the at least one second camera 240, 250 and further comprises a second control unit 220 for performing control so that a subject (i.e., a surveillance object subject) determined to be unrecognizable by the second cameras 240 and 250 is tracked and supervised when the aforementioned surveillance object selection signal is received from the reception unit 210.

If the surveillance object tracking apparatus 200 comprises a plurality of the second cameras 240 and 250 as shown in FIG. 2, for example, different and specific surveillance ranges A and B may be set in the plurality of second cameras 240 and 250, respectively. In such a case, the surveillance object tracking apparatus 200 may be configured such that if a surveillance object subject moves and deviates from the surveillance range A of one camera 240 of the plurality of second cameras 240 and 250, the second control unit 220 determines whether or not the surveillance object subject belongs to the surveillance range B of the camera 250 and the other camera 250 of the plurality of second cameras 240 and 250 assists an operation of tracking and surpervising the surveillance object subject based on a result of the determination. For example, if the ATM 110 is placed within the surveillance range A and a person whose face is determined to be unrecognizable by the first camera 111 deviates from the surveillance range A and then enters the surveillance range B, the second control unit 220 may analyze image data in an image provided by the second camera 240 in order to check whether or not the surveillance object subject has entered the surveillance range B of another second camera 250 based on the fact that the image data of the surveillance object subject has not been received. If, as a result of the check, the surveillance object subject is found to have entered the surveillance range B, the second camera 250 may be automatically focused on the surveillance object subject within the surveillance range B in order to selectively and intensively collect image data.

The security system 500 according to the present invention may further comprise a door lock device 300 placed in a specific surveillance range B, for example and connected to the surveillance object tracking apparatus 200 in a wired or wireless way for communication. In such a case, if a surveillance object subject determined to be unrecognizable moves and then enters the specific surveillance range B in which the door lock device 300 is placed, the second control unit 220 generates a door lock start-up signal. When the door lock signal is received from the second control unit 220, the door lock device 300 may be activated and controlled so that it changes an ATM security steel-barred window or an airport gate into a LOCK state, for example, so that the surveillance object subject does not get out of the specific surveillance range B in which the door lock device 300 is placed.

As described above, in accordance with the security system 500 according to the present invention, the person concerned with security, such as a policeman or a policewoman, may easily find out a subject having a security problem after a security problem occurs, and instant, effective, and additional security measures may be taken using the plurality of second cameras 240 and 250 although a surveillance object subject has moved

Furthermore, the surveillance object tracking apparatus 200 in accordance with an embodiment of the present invention may further comprise second memory 230. In such a case, the second control unit 220 may be controlled so that it automatically stores an image of a surveillance object subject tracked and surpervised by the second cameras 240 and 250 from the surveillance object determination apparatus 100 from the time when a surveillance object selection signal is received. For reference, the second memory 230 may comprise any type of volatile or non-volatile memory, comprising EPROM, EEPROM, RAM, or FLASH memory, in addition to the first memory (not shown), and may be implemented using a physically detachable type or non-detachable type. It is also to be noted that the second memory 230 may be implemented using a web hard method.

Meanwhile, as shown in FIG. 2 the security system 500 according to the present invention may further comprise an alarm device 400 connected to the surveillance object determination apparatus 200. In such a case, when a surveillance object selection signal is received from the surveillance object determination apparatus 100, the alarm device 400 may generate an alarm message formed of voice, an image, vibration, SMS, or an MMS message. The alarm message may be transmitted to many and unspecified persons, or may be transmitted to a predetermined specific person or specific institution.

FIG. 3 is a flowchart illustrating a security service providing method in accordance with an embodiment of the present invention.

Referring to FIG. 3, first, step S1 to step S3 are performed on the side of the surveillance object determination apparatus 100. At step S1, the first control unit (not shown) of the surveillance object determination apparatus 100 initiates photographing using the first camera 111, 121. In this case, the initiation of the photographing may be constantly performed. However, for example, the first control unit (not shown) may be configured to initiate the photographing of the first camera 111, 121 only when an infrared sensor, etc. embedded in the ATM 110, 120 detects a person who approaches the ATM 110, 120.

Next, at step S2, the first control unit (not shown) determines whether the face of a subject being photographed is unrecognizable or not. In such a case, a conventional face recognition algorithm, etc. may be used. Which part of the subject will become a standard point at which the face is determined to be unrecognizable may be controlled if necessary in any degree.

If, as a result of the determination at step S2, "No" is determined, the process returns to step S1 in which the typical photographing of subjects continues. If, as a result of the determination at step S2, "Yes" is determined, the process proceeds to step S3 in which a surveillance object selection signal for setting the subject whose face is unrecognizable as a surveillance object subject is generated. The surveillance object selection signal generated at step S3 is received through the reception unit 210 of the surveillance object tracking apparatus 200 at step S4. The second control unit 220 of the surveillance object tracking apparatus 200 manages the image of the surveillance object subject, captured by the first camera 111, 121, as a kind of digital montage when the surveillance object selection signal is received.

Next, at step S5, whether or not a subject having image data that complies with the digital montage regarding the surveillance object subject has entered the surveillance range A, B of the second camera 240, 250 is determined, and the surveillance object subject is photographed by the second camera 240, 250. Even in this case, a scheme for matching faces with each other or comparing the 3D image data of an outward shape of the subject with the digital montage may be used in a similar manner as that of step S2.

Thereafter, at step S6, the image data of the surveillance object subject photographed by the second camera 240, 250 is automatically stored in the second memory 230 of the surveillance object tracking apparatus 200.

In order to take additional security measures, the process may proceed to step S7 in which the door lock device 300 may be stared up, or may proceed to step S8 in which an alarm may be generated using the alarm device 400.

It is noted that although the preferred embodiments of the present invention have been described so far with reference to the accompanying drawings, the aforementioned description or drawings are not intended to restrict the technical spirit of the present invention, but are intended to only illustrate an implementation example of the security system and security service providing method according to the present invention.

For example, the security system 500 according to the present invention does not need to be configured as shown in FIG. 2 or the security service providing method according to the present invention does not need to sequentially perform all the processes having the sequence of FIG. 3 in order to achieve the object of the present invention. It is to be noted that those skilled in the art may configure a system different from that of FIG. 2 based on the contents disclosed in this specification or may implement an invention substantially the same as the present invention in order different from that of FIG. 3 or in order that some of the processes are omitted.

Accordingly, those skilled in the art may modify and change the present invention in various ways without departing from the technical spirit of the present invention, and all the modifications or changes should be construed as belonging to the claims.

## Claims

1. A security system using surveillance cameras, comprising:
a surveillance object determination apparatus comprising at least one first camera, first memory for receiving an image of a subject from the first camera and storing the image, a first control unit for determining the image of the subject stored in the first memory to be unrecognizable according to a specific criterion and generating a surveillance object selection signal, and a transmission unit for sending the surveillance object selection signal in response to an instruction from the first control unit; and
a surveillance object tracking apparatus connected to the surveillance object determination apparatus in a wired or wireless way and comprising a reception unit for receiving the surveillance object selection signal from the surveillance object determination apparatus, at least one second camera, and a second control unit for controlling the second camera so that the second camera tracks and supervises the subject determined to have been unrecognizable when the surveillance object selection signal is received from the reception unit.

2. The security system of claim 1, wherein:
the surveillance object tracking apparatus comprises a plurality of the second cameras,
different and specific surveillance ranges are set in the plurality of second cameras, respectively, and
when the subject determined to have been unrecognizable moves and deviates from a specific surveillance range of one camera of the plurality of second cameras, the second control unit determines whether or not the subject determined to have been unrecognizable belongs to a specific surveillance range of another camera of the plurality of second cameras and controls the another camera so that the another camera tracks and supervises the subject based on a result of the determination.

3. The security system of claim 2, further comprising a door lock device placed within the specific surveillance range and connected to the surveillance object tracking apparatus,
wherein the second control unit generates a door lock start-up signal when the subject determined to have been unrecognizable moves and enters the specific surveillance range in which the door lock device is placed, and
the door lock device is activated when the door lock signal is received from the second control unit, and prevents the subject from deviating from the specific surveillance range in which the door lock device is placed.

4. The security system of claim 1, wherein:
the surveillance object determination apparatus comprises a plurality of the first cameras, and
the first control unit generates the surveillance object selection signal only when a specific number or more of the plurality of first cameras determine the subject to be unrecognizable.

5. The security system of claim 1, wherein:
the surveillance object determination apparatus comprises a plurality of the first cameras, and
the first control unit generates a signal for cancelling a selection of a surveillance object for the subject determined to have been unrecognizable if one camera of the plurality of first cameras determines the subject to be unrecognizable and then another camera of the plurality of first cameras determines that the subject is recognizable.

6. The security system of claim 1, wherein:
the surveillance object tracking apparatus comprises second memory, and
the second control unit automatically stores images of the subject determined to have been unrecognizable, tracked and supervised by the second camera from a time when the surveillance object selection signal is received, in the second memory.

7. The security system of claim 1, further comprising an alarm device connected to the surveillance object determination apparatus,
wherein the alarm device generates an alarm message when the surveillance object selection signal is received from the surveillance object determination apparatus.

8. The security system of claim 1, wherein:
the specific criterion is based on whether or not each of an eye, nose, mouth, and face outline of the subject is found to be at least a specific ratio or higher, and
the first control unit is driven according to a face recognition algorithm based on the specific criterion.

9. The security system of claim 1, wherein the at least one first camera and the at least one second camera comprise a smart phone.

10. A security service providing method using a security system comprising surveillance cameras, wherein:
the security system comprises a surveillance object determination apparatus comprising at least one first camera, first memory for receiving an image of a subject from the first camera and storing the image, and a first control unit; and a surveillance object tracking apparatus comprising at least one second camera and a second control unit connected to the second camera, and connected to the surveillance object determination apparatus in a wired or wireless way, and
the security service providing method comprises a first step of determining, by the first control unit, an image of a subject stored in the first memory to be unrecognizable according to a specific criterion and generating a surveillance object selection signal; and a second step of controlling, by the second control unit, the second camera so that the second camera tracks and supervises the subject determined to have been unrecognizable when the surveillance object selection signal is received.

11. The security service providing method of claim 10, wherein:
the surveillance object tracking apparatus comprises a plurality of the second cameras,
different and specific surveillance ranges are set in the plurality of second cameras, respectively, and
the security service providing method further comprises a third step of determining, by the second control unit, whether or not the subject determined to have been unrecognizable belongs to a specific surveillance range of another camera of the plurality of second cameras when the subject determined to have been unrecognizable moves and deviates from a specific surveillance range of one camera of the plurality of second cameras and controlling the another camera so that the another camera tracks and supervises the subject based on a result of the determination.

12. The security service providing method of claim 11, wherein:
the security system further comprises a door lock device placed within the specific surveillance range and connected to the surveillance object tracking apparatus, and
the security service providing method further comprises:
a fourth step of generating, by the second control unit, a door lock start-up signal when the subject determined to have been unrecognizable moves and enters the specific surveillance range in which the door lock device is placed, and
a fifth step of the door lock device being activated when the door lock signal is received from the second control unit and preventing the subject from deviating from the specific surveillance range in which the door lock device is placed.

13. The security service providing method of claim 10, wherein:
the surveillance object determination apparatus comprises a plurality of the first cameras, and
the first step comprises a step of generating, by the first control unit, the surveillance object selection signal only when a specific number or more of the plurality of first cameras determine the subject to be unrecognizable.

14. The security service providing method of claim 10, wherein:
the surveillance object determination apparatus comprises a plurality of the first cameras, and
the first step comprises a step of generating, by the first control unit, a signal for cancelling a selection of a surveillance object for the subject determined to have been unrecognizable if one camera of the plurality of first cameras determines the subject to be unrecognizable and then another camera of the plurality of first cameras determines that the subject is recognizable.

15. The security service providing method of claim 10, wherein:
the surveillance object tracking apparatus comprises second memory, and
the security service providing method further comprises a sixth step of automatically storing, by the second control unit, images of the subject determined to have been unrecognizable, tracked and supervised by the second camera from a time when the surveillance object selection signal is received, in the second memory.

16. The security service providing method of claim 10, wherein:
the security system further comprises an alarm device connected to the surveillance object determination apparatus, and
the security service providing method further comprises a seventh step of generating, by the alarm device, an alarm message when the surveillance object selection signal is received from the surveillance object determination apparatus.

17. The security service providing method of claim 10, wherein:
the specific criterion is based on whether or not each of an eye, nose, mouth, and face outline of the subject is found to be at least a specific ratio or higher, and
the first control unit is driven according to a face recognition algorithm based on the specific criterion.

18. The security service providing method of claim 10, wherein:
the at least one first camera and the at least one second camera comprise a smart phone, and
the security service providing method further comprises an eighth step of downloading and installing a smart phone application for executing an algorithm according to the security service providing method on the smart phone.
